# EUROPÄISCHE PATENTSCHRIFT

(11) **EP 2 265 523 B1**
(45) Veröffentlichungstag und Bekanntmachung des Hinweises auf die Patenterteilung: **24.10.2012**
(21) Anmeldenummer: 09733827.1
(22) Anmeldetag: 04.02.2009
(51) Int. Cl.: B65G 37/00, B65C 1/02

(54) **VORRICHTUNG ZUM FÖRDERN VON PRODUKTEN**
DEVICE FOR CONVEYING PRODUCTS
DISPOSITIF DE TRANSPORT DE PRODUITS

(30) Priorität: 23.04.2008 DE 102008020464
(43) Veröffentlichungstag der Anmeldung: 29.12.2010
(73) Patentinhaber: Espera-Werke GmbH, 47058 Duisburg (DE)
(72) Erfinder: KRUTMANN, Roger, 59757 Arnsberg (DE)
(74) Vertreter: Cohausz & Florack
(86) Internationale Anmeldenummer: PCT/EP2009/051254
(87) Internationale Veröffentlichungsnummer: WO 2009/130067

(56) Entgegenhaltungen:
- WO-A-02/12095
- DE-U1- 20 305 351
- US-A- 5 127 789
- US-A- 5 684 275

## Beschreibung

Die Erfindung betrifft eine Vorrichtung zum Fördern von Produkten, insbesondere Lebensmittelprodukten, gemäß dem Oberbegriff des Anspruchs 1.

Eine solche Fördervorrichtung ist aus der Praxis bekannt. Sie dient zur Förderung von Lebensmittelprodukten, welche im Zuge der Förderung mit einem Preisetikett versehen werden. Hierzu wird vor dem Etikettiervorgang das jeweilige Produkt gewogen und das Ergebnis des Wiegens beim Drucken des Etiketts berücksichtigt. Solche bekannten Fördervorrichtungen eignen sich für das Fördern bzw. Etikettieren von Produkten, die sich bereits in einer Packung befinden, wobei das Etikett auf die Ober- oder Unterseite der Verpackung aufgedruckt wird. Es eignet sich auch für solche einzelnen unverpackten Produkte, welche eine im Wesentlichen ebene Bodenfläche aufweisen, so dass sie beim Fördern auf der Förderstrecke verbleiben. Hingegen weist die aus der Praxis bekannte Vorrichtung den Nachteil auf, dass solche Produkte, die rund sind oder eine andere ballige Kontur aufweisen, nicht sicher auf der Förderstrecke gehalten werden.

Aus der DE 21 47 939 ist eine Etikettiervorrichtung bekannt, mit der sich einzelne runde Körper, wie Früchte usw., transportieren lassen. Hierzu ist zum Fördern der Produkte ein Rollenförderband vorgesehen, auf dessen Rollenachse jeweils zwei sich aufeinander zu verjüngende Rollen vorgesehen sind. Aus der WO 02 12095 ist eine Vorrichtung zum Fördern von Produkten gemäß dem Oberbegriff des Anspruchs 1 bekannt. Der Erfindung liegt die Aufgabe zugrunde, eine Vorrichtung

der eingangs genannten Art dahingehend weiterzuentwickeln, dass zum Transport runder oder balliger Produkte eine variable Anpassung der Vorrichtung an unterschiedliche Dimensionen der Produkte konstruktiv einfach möglich ist.

Diese Aufgabe wird mit der Vorrichtung zum Fördern von Produkten gemäß Anspruch 1 gelöst.

Die Erfindung zeichnet sich dadurch aus, dass nunmehr die Hilfsfördereinrichtung die Förderung des Produktes übernimmt, deren Fördermittel vom Antriebsmittel angetrieben wird. Die Hilfsfördereinrichtung ist dabei so gestaltet, dass sie in ihrer Breite so auf die Dimension und die Konturen des Produktes abgestimmt ist, dass das Produkt seitlich gestützt getragen wird und ihre Höhenabmessung so ausgelegt ist, dass das von den Stützmitteln abgestützte Produkt nicht in Kontakt mit dem Antriebsmittel gerät. Auf diese Weise wird das Produkt direkt vom Fördermittel ohne Gefahr seitlichen Auslenkens oder Wegrollens befördert.

ErfindungsgemäB ist vorgesehen, dass die Stützmittel der mindestens einen Hilfsfördereinrichtung durch mindestens zwei senkrecht zur Förderrichtung zueinander beabstandete Schienenelemente gebildet sind, die zwischen sich das Produkt tragen. Hier ergibt sich eine einfache Gestaltung, da die Schienenelemente zwischen sich das Produkt einschließen und der Schwerpunkt des Produkts nunmehr so gelagert sein kann, dass eine stabile Führung möglich ist. Durch die Variation des Abstands der Schienenelemente zueinander kann die Hilfsfördereinrichtung optimal auf die Dimension des Produktes abgestimmt werden. Die Variation des Abstandes kann dabei entweder manuell oder automatisch, beispielsweise unter Einsatz einer die Produktdimensionen erfassenden Detektionseinrichtung, z.B. einer Kamera, erfolgen. Bevorzugt wird ein Schienenelement von einem Trägerelement getragen, das an der Basis befestigbar ist. Hierdurch ergibt sich unter anderem auch ein modulartiger Aufbau für die Hilfsfördereinrichtung.

Eine bevorzugte Ausführungsform der Erfindung sieht vor, dass das Schienenelement ein entlang seines Umfangs verlaufendes Treibmittel, insbesondere einen Riemenantrieb, aufweist, welches an der Unterseite des Schienenelementes mit dem Antriebsmittel und auf dessen Oberseite mit dem Produkt in Reibschluss steht. Durch den Reibschluss zwischen dem Riemenantrieb an der Unterseite des Schienenelementes und dem Antriebsmittel der Förderstrecke ergibt sich eine optimale Kraftübertragung. Hierzu muss, damit eine Förderung in die ursprüngliche Förderrichtung erfolgen kann, die Antriebsrichtung des reversierbaren Antriebsmittels entgegensetzt werden.

Bevorzugt ist vorgesehen, dass der Riemenantrieb über Umlenkrollen geführt ist, dass die Umlenkrollen Kugellager aufweisen und dass entlang der Unterseite des Schienenelementes zueinander beabstandete Lagerrollen vorgesehen sind. Durch die auf der Unterseite des Schienenelementes vorgesehenen Lagerrollen wird erreicht, dass nur im Bereich der Lagerrollen eine Kraftübertragung auf reibschlüssige Weise vom Antriebsmittel auf das Treibmittel erfolgt und dass an den übrigen Stellen eine möglichst geringe Reibung entsteht. Hierzu sind die Lagerrollen mit einem Kugellager, z.B. einem Rollenlager, ausgelegt oder aber durch Gleitmaterialien oder Luftpolster gelagert. Die Reibung des Treibmittels im Schienenelement kann durch spezielle Gleitmaterialien oder Luftpolster verringert werden.

Bevorzugte Ausführungsformen für den das Treibmittel bildenden Riemenantrieb sind ein Rundriemen, eine Kette, ein Zahnriemen, ein Flachriemen oder ein Keilrippenriemen.

Dadurch, dass nach einer weiteren Ausführungsform die Hilfsfördereinrichtung auf eine Führung des Antriebsmittels aufsetzbar ist, ergibt sich der Vorteil, dass eine flexible Anpassung an die jeweiligen Förderbedingungen ermöglicht wird. Die Hilfsfördereinrichtung muss nicht fest mit der herkömmlichen Fördereinrichtung verbunden werden, sondern kann in einfacher Weise, beispielsweise durch eine Stiftverbindung von oben, eingesetzt werden. Hierdurch ergibt sich auch eine leichte Austauschbarkeit, so dass bei einem Produktwechsel eine auf das neue Produkt ausgelegte Hilfsfördereinrichtung gewählt werden kann. Eine weiter bevorzugte Ausführungsform sieht vor, dass Gruppen von senkrecht zur Förderrichtung jeweils zueinander versetzten Schienenelementen vorgesehen sind, deren jeweilige Höhen auf die Oberflächenkontur des Produktes abgestimmt sind, wobei auf den jeweiligen Berührungspunkten mit dem Produkt die Winkelgeschwindigkeiten der jeweiligen Riemenantriebe übereinstimmen. Jedes der senkrecht zueinander versetzten Schienenelemente kann entweder separat angetrieben sein oder nur mindestens eines der senkrecht zueinander versetzten Schienenelemente einer Gruppe, wobei die übrigen über ein Getriebe an das angetriebene Schienenelement angeschlossen sind.

Durch jede der Ausführungsformen ergibt sich eine besonders sicherere Lagerung des Produktes, da dieses an mehreren Stellen unterstützt wird. Dies ist insbesondere vorteilhaft bei vergleichsweise schweren Produkten, z.B. Kürbissen oder Melonen.

Die bevorzugte Ausführungsform für das Antriebsmittel ist ein umlaufendes Band.

Vorteilhafterweise besteht die horizontale Förderstrecke aus einzelnen, mindestens zwei Streckenabschnitten, wobei jeder Streckenabschnitt eine eigene Funktion aufweist, z.B. eine Einlaufstrecke für das Produkt, eine Wägestrecke für das Produkt, eine Etikettierstation oder eine Auslaufstrecke für das Produkt. Es ist dann jedem Streckenabschnitt jeweils eine Hilfsfördereinrichtung zugeordnet, so dass basierend auf der aus der Praxis bekannten Vorrichtung in einfacher Weise eine Umrüstung im Sinne der Erfindung erfolgen kann, so dass mit einer solchen Nachrüstung der Übergang auch auf bislang nicht handzuhabende Produkte in einfacher Weise erfolgen kann.

Eine weitere besondere Ausgestaltung der Erfindung ergibt sich für denjenigen Bereich, an dem zwei benachbarte Hilfsfördereinrichtungen parallel zueinander laufen. Dabei ist zunächst vorgesehen, dass sich die benachbarten Schienenelemente überlappen und dass die Abstände der jeweiligen Schienenelemente zueinander derart angepasst sind, dass jeweils zwei Schienenelemente seitlich eng aneinander liegen, sich aber nicht berühren. Um gleichwohl eine Schwerpunktveränderung des Produktes beim Übergang zwischen zwei Hilfsfördereinrichtungen zu minimieren, ist eine Auslenkvorrichtung bzw. Höheneinstellung auf der Oberseite eines Schienenelementes vorgesehen. Diese dient dazu, das Treibmittel gezielt in seiner Höhe variierbar zu führen, damit die unvermeidlichen Abstandssprünge zwischen den Schienenelementen ausgeglichen werden. Die Führung des Treibmittels in Bezug auf dessen Höhe ist dann jeweils auf die Geometrie des Produktes abgestimmt, wobei dies entweder manuell erfolgen kann oder aber automatisch unter Einsatz eines die Produktgeometrie der Übergangsstelle erfassenden optischen Detektionsmittels, insbesondere eine Kamera. Vorzugsweise ist als Stellglied für die Auslenkausrichtung ein Exzenter vorgesehen.

Die Erfindung wird im Folgenden anhand einer Zeichnung näher erläutert. Dabei zeigen
- Fig. 1a: ein erstes Ausführungsbeispiel der Erfindung in Vorderansicht;
- Fig. 1b: Figur 1a in Draufsicht;
- Fig. 1c: Figur 1a in Seitenansicht;
- Fig. 1d: ein Detail zu Figur 1a im Bereich der Umlenkrolle und
- Fig. 1e: eine Erläuterungsskizze im Zusammenhang mit Figur 2a;
- Fig. 2: ein zweites Ausführungsbeispiel der Erfindung;
- Fig. 3: ein drittes Ausführungsbeispiel der Erfindung;
- Fig. 4a: ein viertes Ausführungsbeispiel der Erfindung in Seitenansicht;
- Fig. 4b: das Ausführungsbeispiel nach Fig. 4a in Draufsicht;
- Fig. 4c: das Ausführungsbeispiel nach Figur 4a in einem Detail und
- Fig. 4d: das Ausführungsbeispiel nach Fig. 4a in Vorderansicht;

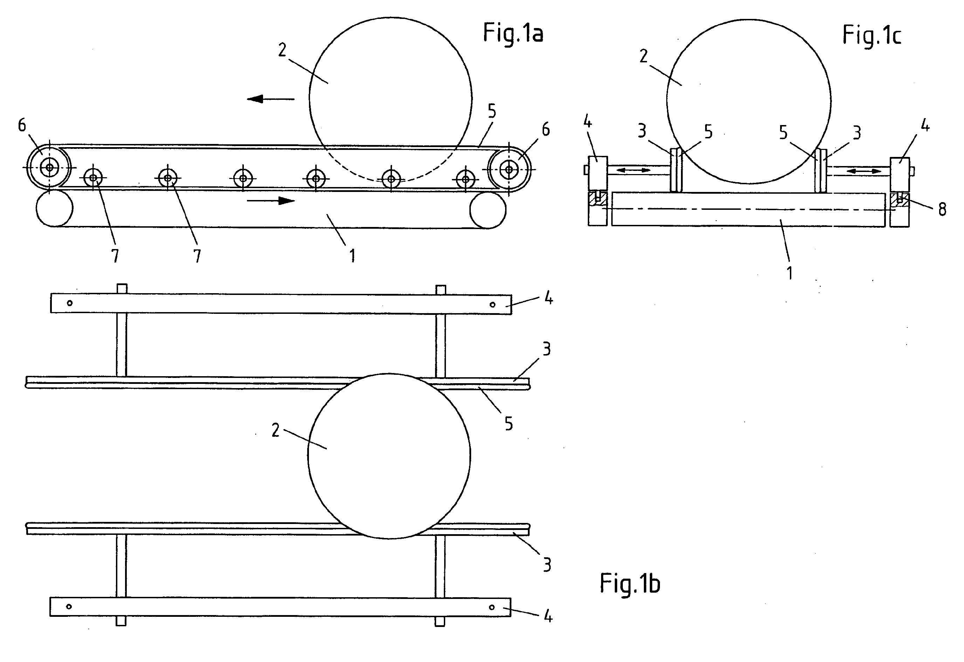

Das in Figuren 1a bis 1e dargestellte erste Ausführungsbeispiel zeigt eine Vorrichtung zum Fördern von Produkten 2. Diese besteht aus einer nicht dargestellten ortsfesten Basis, an der eine horizontale Förderstrecke ausgebildet ist, die durch ein sich im Wesentlichen in horizontaler Richtung erstreckendes Band 1 als Antriebsmittel gebildet ist. Das Transportband 1 wird über Umlenkrollen geführt und beispielsweise in Pfeilrichtung angetrieben. Oberhalb des Bandes 1 befindet sich eine Hilfsfördereinrichtung, die (z.B. Figur 1b) durch zwei in Förderrichtung verlaufende Schienenelemente 3 gebildet ist, die jeweils von Trägerelementen 4 getragen werden und ebenfalls an der (nicht dargestellten) ortsfesten Basis geeignet befestigt sind. Der Abstand senkrecht zur Förderrichtung zwischen den Schienenelementen 3 ist, wie die Pfeilrichtungen in Figur 1b anzeigen, sowohl vergrößerbar als auch verkleinerbar, je nach Größe der zur fördernden Produkte 2. Jedes Schienenelement 3 trägt entlang seines Umfangs ein Treibmittel in Form eines Riemenantriebs 5. Dieser ist als ein Rundriemen ausgeführt. An der Unterseite des Schienenelementes 3 steht der Rundriemen 5 mit dem Band 1 in Reibschluss, so dass die Laufrichtung des Bandes 1 auch die Laufrichtung des Rundriemens auf der Unterseite des Schienenelementes 3 bestimmt. Auf der Oberseite des Schienenelementes 3 steht der Rundriemen mit dem Produkt 2 in Reibschluss, so dass dieses von der Bewegung des Rundriemens 5 mitgenommen wird. Auf der Unterseite des Schienenelementes 3 befinden sich Lagerrollen 7, die die Stellen definieren, an denen der Reibschluss zum Band 1 ausgeübt wird. Der Rundriemen 5 ist über Umlenkrollen 6 am Schienenelement geführt, wie insbesondere aus Figur 1a hervorgeht.

Der die Hilfsfördereinrichtung bildende Aufsatz ist lösbar durch einen in den Trägerelementen ausgebildeten Stift 8 in einer in der Führungsvorrichtung für das Band 1 ausgebildeten Bohrung gelagert (Figur 1c). Hierdurch sind ein einfaches Einsetzen und ein einfacher Austausch der jeweiligen Hilfsfördereinrichtungen möglich.

Wie besondere aus Figur 1c hervorgeht, ist die Höhe der Schienenelemente 3 so bemessen, dass sie an die Geometrie des Produktes 2 derart angepasst ist, dass der zwischen den Schienenelementen 3 verlaufende Bereich des Produktes 2 an seiner Unterseite nicht mit dem Band 1 in Berührung kommt, wodurch eine Förderung des Produktes 2 verhindert werden würde.

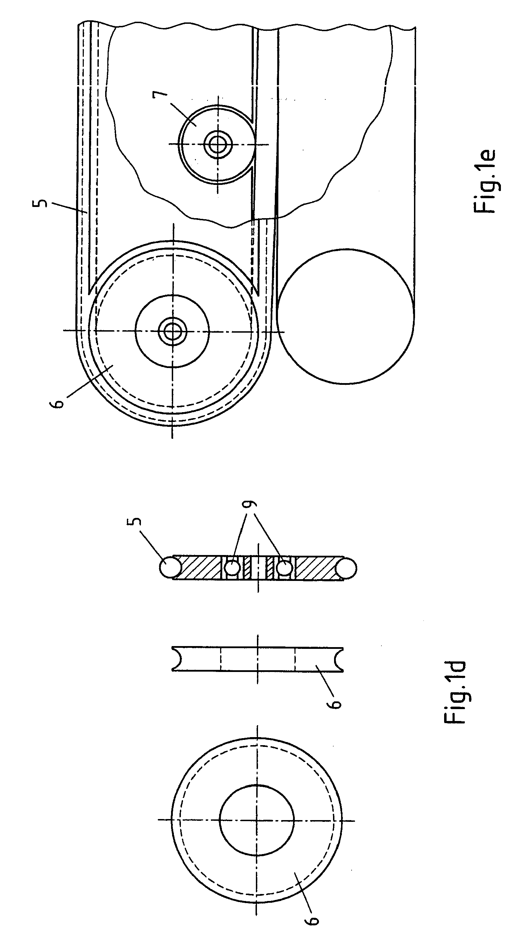

Das in Figur 1d dargestellte Detail der Ausführungsform nach Figur 1a zeigt eine Umlenkrolle 6, in der der Rundriemen 5 geführt ist. Die Umlenkrolle 6 ist mittels eines Kugellagers 9, insbesondere eines Rollenlagers, im Schienenelement 3 gelagert.

Wie Figur 1e zeigt, ist jede der Lagerrollen 7 reibungsarm gelagert, beispielsweise mit einem Luftpolster oder Gleitmaterialien, so dass die Reibung zwischen dem Schienenelement 3 und dem Rundriemen 5 möglichst gering gehalten wird.

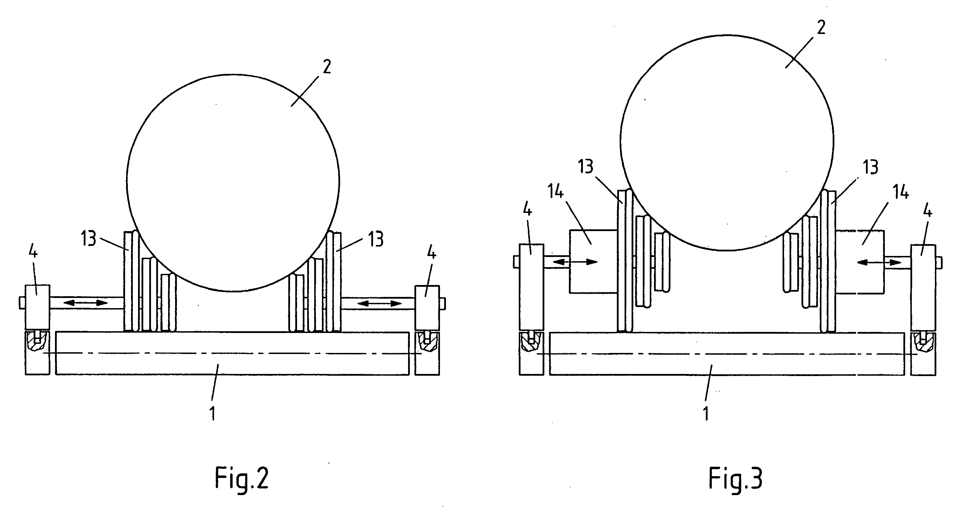

Figur 2 zeigt ein zweites Ausführungsbeispiel der Erfindung. Bei diesem ist statt einem einzigen Schienenelement auf jeder Seite des Produktes 2 ein Satz (eine Gruppe) von drei Schienenelementen 13 vorgesehen, deren Abmessungen an die Geometrie des Produktes 2 derart angepasst sind, dass sich an den Berührungspunkten zwischen den Schienenelementen 13 und der Oberfläche des Produktes 2 jeweils die gleiche Winkelgeschwindigkeit ergibt. Dabei ist jedes der Schienenelemente einzeln vom Band 1 angetrieben ausgeführt.

Das in Figur 3 dargestellte dritte Ausführungsbeispiel der Erfindung unterscheidet sich von demjenigen, wie es Gegenstand des zweiten Ausführungsbeispiels ist, dadurch, dass der Satz von Schienenelementen 13 so gestaltet ist, dass nur eines der Schienenelemente über Reibschluss angetrieben wird und die anderen Schienenelemente über geeignete Übersetzungsverhältnisse eines Getriebes 14 in eine solche Geschwindigkeit versetzt werden, dass die Umfangsgeschwindigkeiten am Ort des Produktes 2 wiederum übereinstimmend sind.

Die Ausführungsformen nach Figur 2 und 3 eignen sich insbesondere für schwere und große Produkte, sowie für Produkte mit von der runden Form stark abweichender Oberfläche.

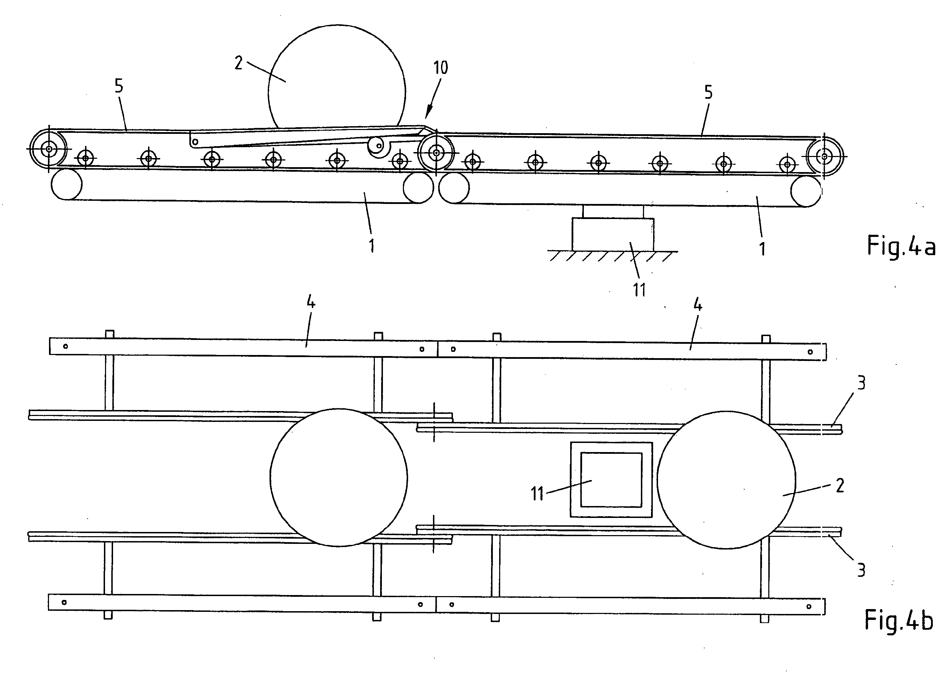

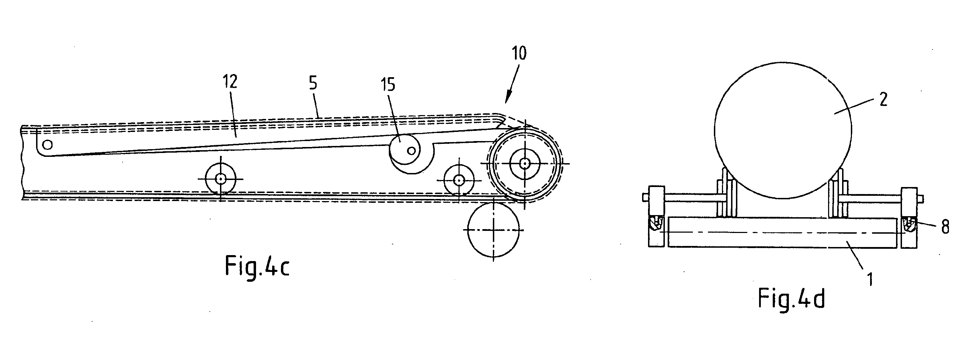

Schließlich zeigen die Figuren 4a bis 4d das vierte Ausführungsbeispiel der Erfindung. Es unterscheidet sich von den zuvor dargestellten Ausführungsbeispielen dadurch, dass entlang der Förderstrecke nunmehr zwei Streckenabschnitte gebildet werden, wobei der linke Streckenabschnitt eine Einlaufstrecke für das Produkt 2 ist und der rechte Streckenabschnitt eine Waage 11 enthält. Jedem der Förderstreckenabschnitte ist eine separate Hilfsfördereinrichtung zugeordnet. An der Stoßstelle zwischen zwei benachbarten Hilfsfördereinrichtungen ist es erforderlich, dass diese so gestaltet sind, dass sie einen Überlappungsbereich bilden, so dass ein stetiger Transport des Produktes erfolgen kann.

Allerdings ist an den Überlappungsstellen zwischen den Hilfsfördereinrichtungen durch den Abstandssprung benachbarter Schienenelemente 3 mit einem Unstetigkeitsverlauf der Bewegung des Produktes 2 zu rechnen. Um diesen zu kompensieren, ist die in Figur 4c dargestellte Auslenkvorrichtung 12 vorgesehen.

Die Auslenkeinrichtung besteht aus einem einseitig gelagerten Hebel 12, welcher von einem Exzenter 15 betätigt wird. Der Hebel 12 greift an die Unterseite des Riemens 5 an und erhöht dessen verlauf im Vergleich zu dem in den übrigen Ausführungsbeispielen dargestellten im Wesentlichen ebenen Verlauf. Hierdurch wird der Sprung in dem Abstand der Schienenelemente bei dem Übergang von einer Hilfsfördereinrichtung auf die andere ausgeglichen. Die Einstellung der Auslenkvorrichtung kann anstelle über einen Exzenter mit Feder bzw. Dämpfer auch über andere Betätigungsmittel erfolgen, beispielsweise auch automatisch unter Einsatz eines entsprechenden Detektors für die Dimension des Produktes im Bereich der Übergangsstelle.

Die vorliegende Erfindung weist insbesondere den Vorteil auf, dass das zu fördernde Produkt mit seinem Schwerpunkt möglichst tiefliegend transportiert wird. Hierzu ist eine entsprechende Anpassung des Abstandes zwischen den Schienenelementen vorzunehmen; auch diese kann automatisch unter Einsatz eines entsprechenden Detektors für die Dimension des Produktes erfolgen. Aufgrund des Reibschlusses zwischen dem Antriebsmittel (Band 1) und dem Treibmittel der Hilfsfördereinrichtung lässt sich eine bestehende Fördervorrichtung, wie sie aus dem Stand der Technik bekannt ist, in einfacher Weise nachrüsten. Auch lässt sich ein leichter modulartiger Austausch bewirken, da die Hilfsfördervorrichtungen jeweils nur von oben in die bestehende Einrichtung eingesetzt werden müssen.

## Patentansprüche

1. Vorrichtung zum Fördern von Produkten (2), insbesondere Lebensmittelprodukten, bestehend aus einer von einer Basis getragenen horizontalen Förderstrecke, die ein Antriebsmittel (1) aufweist, wobei das Antriebsmittel (1) reversierbar angetrieben ist und diesem mindestens eine ebenfalls von der Basis getragene Hilfsfördereinrichtung (3, 4, 5) zugeordnet ist, welche ein vom Antriebsmittel (1) angetriebenes Fördermittel (5) für das Produkt (2) aufweist sowie Stützmittel (3, 4), mittels denen das Produkt (2) seitlich gestützt und mit Abstand zum Antriebsmittel (1) getragen ist, wobei die Stützmittel der mindestens einen Hilfsfördereinrichtung (3, 4, 5) durch mindestens zwei senkrecht zur Förderrichtung zueinander beabstandete Schienenelemente (3) gebildet sind, die zwischen sich das Produkt (2) tragen und Betätigungsmittel zur Variation des Abstands der Schienenelemente (3) zueinander vorgesehen sind, **dadurch gekennzeichnet, dass** die horizontale Förderstrecke ein sich im Wesentlichen in horizontaler Richtung erstreckendes Antriebsmittel (1) aufweist, und die Betätigungsmittel zur Variation des Abstands der Schienenelemente (3) zueinander je nach Größe der zu fördernden Produkte (2) vorgesehen sind.

2. Vorrichtung nach Anspruch 1, **dadurch gekennzeichnet, dass** ein Schienenelement (3) von mindestens einem Trägerelement (4) getragen ist, das an der ortsfesten Basis befestigbar ist.

3. Vorrichtung nach einem der vorhergehenden Ansprüche 1 bis 2, **dadurch gekennzeichnet, dass** das Schienenelement (3) ein entlang seines Umfangs verlaufendes Treibmittel, insbesondere einen Riemenantrieb (5), aufweist, welches an der Unterseite des Schienenelementes (3) mit dem Antriebsmittel (1) und auf dessen Oberseite mit dem Produkt (2) in Reibschluss steht.

4. Vorrichtung nach Anspruch 1, **dadurch gekennzeichnet, dass** die mindestens eine Hilfsfördereinrichtung (3, 4, 5) auf eine Führung des Antriebsmittels (1) aufsetzbar ist.

5. Vorrichtung nach Anspruch 4, **dadurch gekennzeichnet, dass** die Verbindung der Hilfsfördereinrichtung (3, 4, 5) mit der Führung des Antriebsmittels (1) durch in eine Bohrung in der Führung eingreifende Führungsstifte (8) der Trägerelemente (4) erfolgt.

6. Vorrichtung nach Anspruch 1, **dadurch gekennzeichnet, dass** Gruppen von senkrecht zur Förderrichtung jeweils zueinander versetzten Schienenelementen (13) vorgesehen sind, deren jeweilige Höhen auf die Oberflächenkontur des Produktes abgestimmt sind.

7. Vorrichtung nach Anspruch 6, **dadurch gekennzeichnet, dass** jedes der senkrecht zueinander versetzten Schienenelemente separat angetrieben ist.

8. Vorrichtung nach Anspruch 6, **dadurch gekennzeichnet, dass** nur mindestens eines der senkrecht zueinander versetzten Schienenelemente eine Gruppe angetrieben ist und die übrigen über ein Getriebe daran angeschlossen sind.

9. Vorrichtung nach einem der vorhergehenden Ansprüche, **dadurch gekennzeichnet, dass** das Antriebsmittel (1) ein Band ist.

10. Vorrichtung nach einem der vorhergehenden Ansprüche, **dadurch gekennzeichnet, dass** die horizontale Förderstrecke aus mindestens zwei Streckenabschnitten besteht.

11. Vorrichtung nach Anspruch 9, **dadurch gekennzeichnet, dass** entlang eines Streckenabschnittes der Förderstrecke mindestens eine Etikettierstation zum Aufbringen eines Warenetikettes auf die Produktoberfläche ausgebildet ist.

12. Vorrichtung nach Anspruch 9, **dadurch gekennzeichnet, dass** entlang eines weiteren Streckenabschnittes der Förderstrecke mindestens eine Wägevorrichtung (11) zur Ermittlung des Produktgewichtes ausgebildet ist.

13. Vorrichtung nach einem der vorhergehenden Ansprüche 9 bis 11, **dadurch gekennzeichnet, dass** einem Streckenabschnitt jeweils eine Hilfsfördereinrichtung zugeordnet ist.

14. Vorrichtung nach Anspruch 13, **dadurch gekennzeichnet, dass** jeweils zwei benachbarte Hilfsfördereinrichtungen derart überlappend miteinander verbunden sind, dass die jeweiligen Schienenelemente (3) einander berührungslos benachbart sind.

15. Vorrichtung nach einem der vorhergehenden Ansprüche 1 bis 3, **dadurch gekennzeichnet, dass** eine Auslenkeinrichtung, insbesondere eine Höheneinstellung (12) vorgesehen ist, mittels der das Treibmittel (5) auf der Oberseite des Schienenelementes (3) in seiner Höhe variierbar geführt wird.

16. Vorrichtung nach Anspruch 15, **dadurch gekennzeichnet, dass** die Höhe des Treibmittels derart auf die Geometrie des Produktes (2) abstimmbar ist, dass beim Übergang zwischen zwei benachbarten Hilfsfördereinrichtungen eine abrupte Schwerpunktveränderung des Produktes (2) verhindert wird.

17. Vorrichtung nach Anspruch 16, **dadurch gekennzeichnet, dass** die Höhenabstimmung automatisch unter Einsatz eines die Produktgeometrie erfassenden optischen Detektionsmittels, insbesondere einer Kamera, erfolgt.

18. Vorrichtung nach einem der Ansprüche 15 bis 17, **dadurch gekennzeichnet, dass** als Stellglied für die Auslenkeinrichtung (12) ein insbesondere federnd oder gedämpft ausgestalteter Exzenter (15) vorgesehen ist.

## Claims

1. Device for conveying products (2), in particular food products, consisting of a horizontal conveyor section carried by a base, said conveyor section comprising a drive means (1), the drive means (1) being driven in a reversible manner and being associated with at least one auxiliary conveying device (3, 4, 5) also carried by the base, said auxiliary conveying device comprising a conveying means (5) for the product (2) driven by the drive means (1) as well as supporting means (3, 4), by means of which the product (2) is laterally supported and is carried at a distance from the drive means (1), the supporting means of the at least one auxiliary conveying device (3, 4, 5) being formed by at least two rail elements (3) spaced apart from one another perpendicular to the direction of conveyance, said rail elements carrying the product (2) between one another and actuating means being provided for varying the distance of the rail elements (3) from one another, **characterised in that** the horizontal conveyor section comprises a drive means (1) extending substantially in the horizontal direction, and the actuating means are provided for varying the distance of the rail elements (3) from one another depending on the size of the products (2) to be conveyed.

2. Device according to Claim 1, **characterised in that** a rail element (3) is carried by at least one carrier element (4) which may be fastened to the fixed base.

3. Device according to one of the preceding claims 1 to 2, **characterised in that** the rail element (3) comprises a driving means extending along its periphery, in particular a belt drive (5), which on the lower face of the rail element (3) is in a frictional connection with the drive means (1) and on the upper face thereof is in a frictional connection with the product (2).

4. Device according to Claim 1, **characterised in that** the at least one auxiliary conveying device (3, 4, 5) may be positioned on a guide of the drive means (1).

5. Device according to Claim 4, **characterised in that** the auxiliary conveying device (3, 4, 5) is connected to the guide of the drive means (1) by guide pins (8) of the carrier elements (4) engaging in a bore in the guide.

6. Device according to Claim 1, **characterised in that** groups of rail elements (13) are provided, each offset relative to one another perpendicular to the direction of conveyance, the respective heights thereof being adapted to the surface contour of the product.

7. Device according to Claim 6, **characterised in that** each of the rail elements offset perpendicular to one another is driven separately.

8. Device according to Claim 6, **characterised in that** only at least one of the rail elements of a group is driven, said rail elements being offset perpendicular to one another, and the remainder of said rail elements are connected thereto via a gear mechanism.

9. Device according to one of the preceding claims, **characterised in that** the drive means (1) is a belt.

10. Device according to one of the preceding claims, **characterised in that** the horizontal conveyor section consists of at least two portions.

11. Device according to Claim 9, **characterised in that** at least one labelling station is configured along a portion of the conveyor section, for attaching a product label to the product surface.

12. Device according to Claim 9, **characterised in that** at least one weighing device (11) for determining the product weight is configured along a further portion of the conveyor section.

13. Device according to one of the preceding claims 9 to 11, **characterised in that** in each case one auxiliary conveying device is associated with a portion of said conveyor section.

14. Device according to Claim 13, **characterised in that** in each case two adjacent auxiliary conveying devices are connected together so as to overlap, such that the respective rail elements (3) are adjacent to one another without contact.

15. Device according to one of the preceding claims 1 to 3, **characterised in that** a deflection device, in particular a height adjuster (12), is provided, by means of which the driving means (5) is guided in a variable manner in terms of its height on the upper face of the rail element (3).

16. Device according to Claim 15, **characterised in that** the height of the driving means may be adapted to the geometry of the product (2) such that during the transition between two adjacent auxiliary conveying devices an abrupt alteration to the centre of gravity of the product (2) is prevented.

17. Device according to Claim 16, **characterised in that** the height is adjusted automatically by the use of an optical detection means, in particular a camera, detecting the product geometry.

18. Device according to one of Claims 15 to 17, **characterised in that** an eccentric (15), in particular designed in a resilient or damped manner, is provided as the actuating member for the deflection device (12).

## Revendications

1. Dispositif pour le transport de produits (2), en particulier de produits alimentaires, constitué d'un trajet de transport horizontal supporté par une base, comportant un moyen d'entraînement (1), dans lequel le moyen d'entraînement (1) est entraîné de façon réversible et doté d'au moins un système de transport auxiliaire (3, 4, 5), également supporté par la base et comportant un moyen de transport (5) entraîné par le moyen d'entraînement (1), pour le produit (2), ainsi que des moyens de support (3, 4), à l'aide desquels le produit (2) est soutenu latéralement et porté en respectant un espacement par rapport au moyen d'entraînement (1), dans lequel les moyens de support de l'au moins un système de transport auxiliaire (3, 4, 5) sont formés par au moins deux éléments de rail (3) espacés l'un de l'autre perpendiculairement au sens de transport et portant le produit (2) entre eux, et dans lequel sont prévus des moyens d'actionnement pour régler l'espacement entre les éléments de rail (3),
**caractérisé en ce que**
le trajet de transport horizontal comporte un moyen d'entraînement (1) s'étendant essentiellement horizontalement, et **en ce que** les moyens d'actionnement sont prévus pour le réglage de l'espacement entre les éléments de rail (3) en fonction de la taille des produits (2) à transporter.

2. Dispositif selon la revendication 1, **caractérisé en ce qu'**un élément de rail (3) est porté par au moins un élément de support (4) susceptible d'être fixé sur la base stationnaire.

3. Dispositif selon l'une des revendications précédentes 1 à 2, **caractérisé en ce que** l'élément de rail (3) comporte un moyen de propulsion s'étendant le long de sa périphérie, en particulier un entraînement par courroie (5), en engagement par friction avec le moyen d'entraînement (1) du côté inférieur de l'élément de rail (3) et avec le produit (2) du côté supérieur de celui-ci.

4. Dispositif selon la revendication 1, **caractérisé en ce que** l'au moins un système de transport auxiliaire (3, 4, 5) peut être monté sur un dispositif de guidage du moyen d'entraînement (1).

5. Dispositif selon la revendication 4, **caractérisé en ce que** la liaison entre le système de transport auxiliaire (3, 4, 5) et le dispositif de guidage du moyen d'entraînement (1) est réalisée par des tiges de guidage (8) des éléments de support (4), qui s'introduisent dans un alésage dans le dispositif de guidage.

6. Dispositif selon la revendication 1, **caractérisé en ce qu'**il est prévu des groupes d'éléments de rail (13) décalés les uns par rapport aux autres perpendiculairement au sens de transport, dont les hauteurs respectives sont adaptées au contour de surface du produit.

7. Dispositif selon la revendication 6, **caractérisé en ce que** chacun des éléments de rail décalés perpendiculairement les uns par rapport aux autres est entraîné séparément.

8. Dispositif selon la revendication 6, **caractérisé en ce que** seul au moins l'un des éléments de rail d'un groupe, décalés perpendiculairement les uns par rapport aux autres, est entraîné, les autres étant reliés à celui-ci par un engrenage.

9. Dispositif selon l'une des revendications précédentes, **caractérisé en ce que** le moyen d'entraînement (1) est une bande.

10. Dispositif selon l'une des revendications précédentes, **caractérisé en ce que** le trajet de transport horizontal est constitué d'au moins deux tronçons de trajet.

11. Dispositif selon la revendication 9, **caractérisé en ce qu'**au moins une station d'étiquetage est prévue le long d'un tronçon du trajet de transport, pour la pose d'une étiquette de produit sur la surface du produit.

12. Dispositif selon la revendication 9, **caractérisé en ce qu'**au moins un dispositif de pesage (11) est prévu le long d'un autre tronçon du trajet de transport, pour déterminer le poids du produit.

13. Dispositif selon l'une des revendications précédentes 9 à 11, **caractérisé en ce qu'**un système de transport auxiliaire est respectivement attribué à un tronçon de trajet.

14. Dispositif selon la revendication 13, **caractérisé en ce que** deux systèmes de transport auxiliaires voisins sont reliés entre eux en se chevauchant de telle manière, que les différents éléments de rail (3) se trouvent côte à côte sans se toucher.

15. Dispositif selon l'une des revendications précédentes 1 à 3, **caractérisé en ce qu'**il est prévu un système de déviation, en particulier un système de réglage de hauteur (12), permettant le guider le moyen de propulsion (5), de façon réglable en hauteur, sur la surface de l'élément de rail (3).

16. Dispositif selon la revendication 15, **caractérisé en ce que** la hauteur du moyen de propulsion peut être adaptée à la géométrie du produit (2), de manière à empêcher un changement abrupt du point de gravité au niveau de la transition entre deux systèmes de transport auxiliaires voisins.

17. Dispositif selon la revendication 16, **caractérisé en ce que** la détermination de la hauteur est réalisée automatiquement, à l'aide d'un moyen de détection, en particulier une caméra, capable de déterminer optiquement la géométrie du produit.

18. Dispositif selon l'une des revendications 15 à 17, **caractérisé en ce qu'**un excentrique (15), en particulier avec ressorts ou amortisseur, est prévu en tant qu'organe de réglage pour le système de déviation (12).
